(19) Europäisches Patentamt
European Patent Office
Office européen des brevets

(11) Veröffentlichungsnummer: **0 088 727**
**B1**

(12) # EUROPÄISCHE PATENTSCHRIFT

(45) Veröffentlichungstag der Patentschrift: **14.01.87**

(51) Int. Cl.⁴: **C 09 B 67/54**

(21) Anmeldenummer: **83810083.2**

(22) Anmeldetag: **28.02.83**

(54) **Verfahren zur Herstellung von Metallkomplexfarbstoff-Präparaten.**

(30) Priorität: **05.03.82 CH 1359/82**

(43) Veröffentlichungstag der Anmeldung: **14.09.83 Patentblatt 83/37**

(45) Bekanntmachung des Hinweises auf die Patenterteilung: **14.01.87 Patentblatt 87/3**

(84) Benannte Vertragsstaaten: **CH DE FR GB LI**

(56) Entgegenhaltungen:
**EP-A-0 037 382**
**DE-B-2 934 949**
**FR-A-2 207 169**
**FR-A-2 513 649**

(73) Patentinhaber: **CIBA- GEIGY AG, Klybeckstrasse 141, CH- 4002 Basel (CH)**

(72) Erfinder: **Erzinger, Paul, Oristalstrasse 58/10, CH-4410 Liestal (CH)**

EP 0 088 727 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der Erfindung ist ein Verfahren zur Herstellung von Präparaten von Metallkomplexfarbstoffen.

Es ist bekannt, verdünnte, salzhaltige Farbstofflösungen oder -dispersionen, wie sie am Ende der Farbstoffsynthese anfallen, oder durch Auflösen oder Anschlämmen von Farbstoffpresskuchen erhalten werden, mittels eines Membrantrennverfahrens aufzukonzentrieren und gleichzeitig zu entsalzen. Ein derartiges Verfahren zur Herstellung von konzentrierten, flüssigen, salzarmen Färbepräparaten ist z.B. in der DE-OS 22 04 725 beschrieben.

Membrantrennverfahren sind wohl einfach in der Durchführung und ermöglichen eine weitgehende Entsalzung von Farbstofflösungen oder -dispersionen, doch sind auch diese Trennverfahren mit Nachteilen behaftet. Ein Hauptproblem stellt die Membranverstopfung dar, die zu untragbar langen Filtrationszeiten führt. Verursacht werden diese Verstopfungen durch kleinste Farbstoffpartikel, die sich in den Poren der Membran festsetzen und die Membran auf diese Weise undurchlässig machen.

Zur Vermeidung derartiger Filtrationsschwierigkeiten wird in der europäischen Patentanmeldung 00 37 382 vorgeschlagen, der aufzukonzentrierenden kalten Lösung oder Dispersion ein Tensid zuzusetzen.

Der alleinige Zusatz von Tensiden zur kalten Syntheselösung von Metallkomplexfarbstoffen hat sich jedoch nicht als ausreichend erwiesen. Hier ist vor der Aufkonzentrierung mittels Membrantrennverfahren bislang noch eine Vormahlung erforderlich.

Aufgabe der Erfindung war es, diese Vormahlung zu umgehen, d.h. die Aufarbeitung von Metallkomplexfarbstoffen so durchzuführen, dass eine Syntheselösung anfällt, die direkt mit Hilfe eines Membrantrennverfahrens aufkonzentriert werden kann, ohne dass eine Vormahlung nötig ist, bei gleichzeitiger Vermeidung von Filtrationsschwierigkeiten hervorgerufen durch Ablagerung feinster Farbstoffteilchen.

Diese Aufgabe wird dadurch gelöst, dass man vor, während oder nach der letzten Synthesestufe des Metallkomplexfarbstoffes, die über 50° C heisse Syntheselösung mit einem anionischen Tensid versetzt und vor Anwendung des Membrantrennverfahrens auf eine Temperatur von nicht tiefer als 20° C abkühlen lässt.

Der Zusatz eines anionischen Tensids zur heissen Syntheselösung bewirkt, dass der Metallkomplexfarbstoff bei Erkalten der Lösung völlig oder nahezu vollständig im gelösten Zustand verbleibt, oder kristallin, mit einer solchen Partikelgrösse ausfällt, die zu keiner Membranverstopfung führt.

Die Syntheselösung kann indirekt oder direkt auf Temperaturen von nicht tiefer als 20° C heruntergekühlt werden. Zur indirekten Kühlung eignet sich z.B. eine Kühlschlaufe, die in den Reaktor eingehängt wird, während man zur direkten Kühlung die Syntheselösung mit kaltem Wasser verdünnt. Um während der Abkühlung Temperaturinhomogenitäten zu vermeiden, ist es vorteilhaft, die Syntheselösung zu rühren.

Als anionische Tenside kommen z.B. in Betracht: Kondensationsprodukte aromatischer Sulfonsäuren mit Formaldehyd, wie Kondensationsprodukte aus Formaldehyd, Naphthalinsulfonsäure und Benzolsulfonsäure, oder ein Kondensationsprodukt aus Rohkresol, Formaldehyd und Naphthalinsulfonsäure, sowie Kondensationsprodukte aus phenol-, Kresol- oder Naphtholsulfonsäure und Formaldehyd oder auch Ligninsulfonate (Sulfit-Celluloscablauge) oder Oxyligninsulfonate. Von diesen bevorzugt sind Formaldehydkondensationsprodukte aromatischer Sulfonsäuren, Kondensationsprodukte aus Rohkresol, Formaldehyd und Naphthalinsulfonsäure; Ligninsulfonate oder Oxyligninsulfonate, insbesondere jedoch Formaldehydkondensate von Naphthalinsulfonsäuren.

Der Syntheselösung können einzelne anionische Tenside oder auch Gemische von zwei oder mehreren anionischen Tensiden zugesetzt werden und zwar bevorzugt in einer Konzentration von 5 bis 30 Gew.-% bezogen auf das Trockengewicht des Farbstoffs.

Vorzugsweise weist die Syntheselösung bei Zugabe des anionischen Tensids eine Temperatur von 70 bis 150° C auf - bei Temperaturen über 100° C wird unter Druck gearbeitet - insbesondere jedoch eine Temperatur von 80 bis 95° C.

Ferner hat es sich als vorteilhaft erwiesen, das anionische Tensid nach der letzten Synthesestufe zuzusetzen. Bei der letzten Synthesestufe handelt es sich z.B. entweder um die Metallisierung, oder, im Fall der Herstellung von 1:2 Komplexen, um die Umsetzung des zuvor gebildeten 1:1 Metallkomplexfarbstoffes mit der zweiten metallisierbaren Farbstoffkomponente.

Als Metallkomplexfarbstoffe kommen 1:1 oder 1:2 Metallkomplexfarbstoffe von Azo- oder Azomethinfarbstoffen oder auch metallisierte Phthalocyanine in Frage. Farbstoffe dieser Art enthalten als zentrales Metallion z.B. ein Nickel-, Kobalt-, Kupfer-, Chrom- oder Eisenion.

Bei 1:2 Metallkomplexfarbstoffen handelt es sich sowohl um symmetrische als auch asymmetrische Komplexe. Als chromophore Liganden sind die folgenden genannt: o-Carboxy-o'-hydroxy-, o-Hydroxy-o'-amino- oder o,o'-Dihydroxyazofarbstoffe des Senzol-azo-benzol-, Naphthalin-azonaphthalin-, Benzol-azonaphthalin-, Benzol-azo-pyrazolon-, Benzolazo-pyridon- oder Benzol-azo-acetessigsäureamid-Typs, wobei diese Gruppierungen unsubstituiert oder auch substituiert sein können. Als Substituenten kommen z.B. in Betracht: gegebenenfalls substituierte Sulfonsäureamid-, Sulfo- oder Nitrogruppen oder Halogenatome. Bevorzugt sind Metallkomplexfarbstoffe, die eine Sulfogruppe im Molekül enthalten.

Ferner werden nach dem erfindungsgemässen Verfahren bevorzugt Präparate von solchen 1:1 oder 1:2 Metallkomplexfarbstoffen hergestellt, die als Liganden Mono- und/oder Disazofarbstoffe und als zentrales Metallion ein Cr- oder Co-Ion enthalten.

Unter dem Ausdruck Membrantrennverfahren wird insbesondere die Hyperfiltration verstanden. Bei diesem Trennverfahren handelt es sich im Gegensatz zur üblichen Filtration, wobei Feststoffteilchen von einer

Flüssigkeit abgetrennt werden, um eine selektive Molekulartrennmethode. Die Membran wirkt als Molekularsieb, und vermag aufgelöste Stoffe, bei ausreichender Molekülgrösse an der Membrangrenzfläche zurückzuhalten. Zweckmässig verwendet man Membranen mit einem "cut off level", der eine mindestens 90 %ige Retention aufweist, wenn diese einer kontinuierlichen Hyperfiltration während 20 bis 30 Minuten unterworfen werden. Hierbei handelt es sich um solche Membranen, deren Trenngrenze im Molekulargewichtsbereich von 300 bis 800, vorzugsweise 400 bis 500 liegt, und die symmetrisch oder insbesondere asymmetrisch sind. Sie lassen Wasser und aufgelöste Stoffe, die auf Grund ihres Molekulargewichts unterhalb der Trenngrenze liegen, bei geringem bis mittlerem Druck durchtreten. Erfindungsgemäss werden Drucke von 10 bis 100 bar und vorzugsweise von 10 bis 30 bar verwendet.

Die Syntheselösung hat während des Membrantrennverfahrens zweckmässigerweise eine Temperatur von 30° bis 40°C. Man kann beispielsweise die Hyperfiltrationsanlage mit der ca. 30°C warmen Syntheselösung beschicken, die sich dann während des Trennvorgangs durch das Umpumpen auf etwa 40°C erwärmt.

Die bevorzugten, erfindungsgemäss verwendbaren Membranen bestehen im wesentlichen aus einem polymeren Stoff. Vorteilhaft sind sie mindestens an ihrer Oberfläche durch Reste modifiziert, die ionisierbare Gruppen tragen.

Bei dem polymeren Stoff handelt es sich um natürliche, halbsynthetische oder synthetische Materialien, die als reaktionsfähige Gruppen beispielsweise Hydroxyl, Amino- und/oder Amidoximgruppen enthalten. Derartige Materialien können mit geeigneten Reagenzien umgesetzt werden, die einerseits ionisierbare Gruppen und andererseits mindestens eine unter Bildung einer chemischen (kovalenten) Bindung reaktionsfähige Gruppierung enthalten.

Beispielsweise können folgende polymere Verbindungen in der angegebenen Weise modifiziert werden:

- Celluloseacetate, z.B. solche mit niedrigem Acetylgruppengehalt, aber auch höher acylierte Cellulose, z.B. sog. Zweieinhalbacetat, oder
- Polyvinylalkohole, oder
- Polyacrylnitril und Copolymere aus Acrylnitril und anderen äthylenisch ungesättigten Monomeren.

Als reaktive Reagenzien, die eine ionisierbare Gruppe enthalten, kommen farblose und farbige Verbindungen in Betracht, z.B. ionogene Reaktivfarbstoffe, die verschiedenen Klassen angehören können, wie Anthrachinon-, Azo- oder Formazanfarbstoffe. Sie können gegebenenfalls auch als Metallkomplexe vorliegen.

Als ionisierbare Gruppen sind z.B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Isothiocyanatgruppen, von primären, sekundären oder tertiären Aminogruppen und Wasserstoff gebildete Ammoniumgruppen oder quaternäre Ammoniumgruppen, ferner Phosphonium- oder Sulfoniumgruppen geeignet. Bevorzugt sind reaktive Verbindungen (Reaktivfarbstoffe) mit Sulfonsäure-, Carbonsäure- oder Ammoniumgruppen.

Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten. Derartige Membranen sind z.B. in der DE-OS 25 05 254 und 30 35 134 und in der europäischen Patentanmeldung 26399 beschrieben.

Die im erfindungsgemässen Verfahren verwendeten Membranen weisen vorzugsweise einen Porendurchmesser von 0,1 bis 50 nm auf.

Bei einem einmaligen Durchgang durch die Membran kann der Reinigungs/ Entsalzungseffekt ohne nennenswerten Farbstoffverlust bis zu 70 % und mehr betragen. Dabei nimmt das Volumen der Lösung der zurückgehaltenen Substanzen (konzentratseitig) entsprechend ab und die Konzentration des zurückgehaltenen Teils zu.

Vorzugsweise hat die Syntheselösung vor dem Membrantrennverfahren einen Trockensubstanzgehalt von 5 bis 15 Gew.-% und die Aufkonzentrierung wird so lang durchgeführt, bis der Trockensubstanzgehalt auf einen Wert von 30 bis 50 % gestiegen ist.

Die nach Durchführung des Membrantrennverfahrens erhaltene konzentrierte, salzarme Farbstofflösung oder -suspension, enthaltend den Metallkomplexfarbstoff und das anionische Tensid kann, gegebenenfalls nach Zugabe von Zusätzen, wie Bindemitteln, Entstäubungsmitteln, Löslichkeitsverbesserern, Dispergiermittel und/oder Coupagemitteln, durch Trocknen in ein festes Farbstoffpräparat überführt werden. Dank der erhöhten Farbstoffkonzentration benötigt man weniger Energie zum Trocknen. Man verwendet die üblichen Trocknungsapparate, insbesondere den Sprühtrockner oder auch den Schaufeltrockner.

Die aufkonzentrierte, salzarme Farbstofflösung oder -suspension kann aber auch direkt zu einer lagerstabilen Flüssigformulierung verarbeitet werden. In diesem Fall ist, gegebenenfalls nach Zugabe von den, für Flüssigformulierungen üblichem Beigaben, wie Textilhilfsmitteln, schaumdämpfenden Mitteln, Gefrierschutzmitteln, Feuchthaltemitteln, Dispergiermitteln und/oder Antimikrobika, die Farbstofflösung oder -suspension nur noch durch Verdünnen und/oder mit Hilfe von Coupagemitteln auf einen vorgegebenen Endfarbstoffgehalt einzustellen.

Durch die erfindungsgemässe Zugabe eines anionischen Tensids in die heisse Syntheselösung des Metallkomplexfarbstoffes werden im erfindungsgemässen Verfahren folgende Vorteile erzielt:

a) der Metallkomplexfarbstoff fällt in feindisperser Form an oder bleibt in Lösung, wodurch eine Verstopfung der Membran während des Membrantrennverfahrens vermieden wird, ferner ist

b) eine Vor- und Hauptmahlung des Farbstoffs nicht erforderlich; die aufkonzentrierte Syntheselösung kann direkt zu einem festen oder flüssigen Farbstoffpräparat weiterverarbeitet werden.

Verwendung finden die erfindungsgemäss hergestellten Metallkomplexfarbstoff-Präparate zur Herstellung

von Färbebädern, Klotzflotten oder Druckpasten. Diese eignen sich vor allem zum Färben oder Bedrucken von Textilmaterial aus natürlichem und insbesondere synthetischem Polyamid.

Die folgenden Beispiele dienen zur Erläuterung der Erfindung. Teile bedeuten Gewichtsteile und Prozente Gewichtsprozente. Unter dem Begriff Lösung wird eine Scheinlösung verstanden, in der der Farbstoff in feinstdispergierter Form vorliegt.

**Beispiel 1**: Zu 1000 Teilen der Syntheselösung des Farbstoffs der

Formel

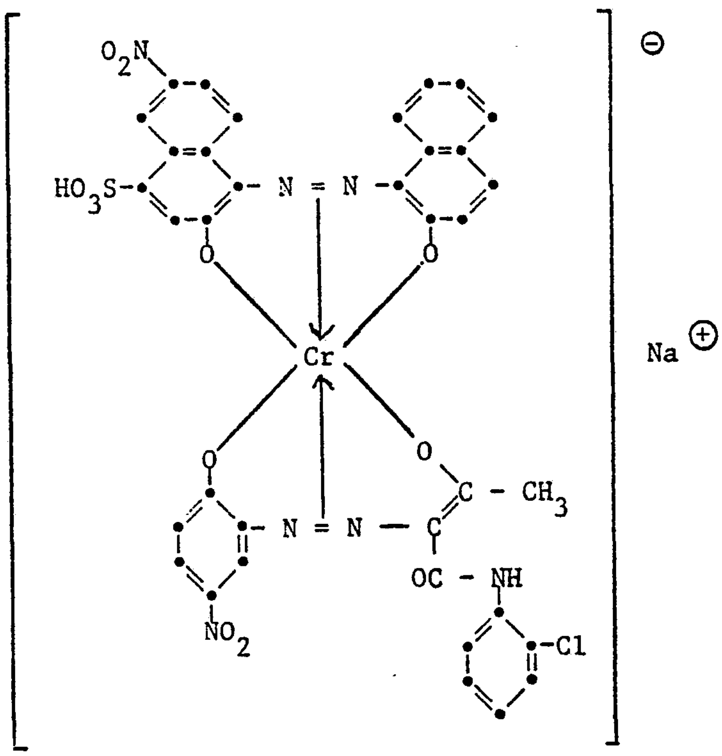

mit einem Trockensubstanzgehalt von 11,2 %, werden am Ende der Synthese und nach der Metallisierung 11 Teile eines Naphthalinsulfonsäure-Formaldehyd-Kondensationsproduktes zugesetzt. Die Syntheselösung hat bei Zusatz des anionischen Kondensationsproduktes eine Temperatur von 90° C. Ist das Tensid eingetragen, lässt man die Syntheselösung unter Rühren auf ca. 30°C abkühlen. Man erhält so eine stabile Lösung des Metallkomplexfarbstoffes obiger Formel, die mittels Hyperfiltration auf einen Trockensubstanzgehalt von 34 % aufkonzentriert wird, bei einem Entsalzungsgrad von 90 %.

Die konzentrierte Farbstofflösung wird mittels Sulfitablauge auf die gewünschte Farbstoff-Endkonzentration eingestellt und anschliessend im Zerstäubungstrockner getrocknet. Man erhält so ein gebrauchsfertiges Farbstoffgranulat.

**Beispiel 2**: Zu 1000 Teilen Syntheselösung des Farbstoffs der Formel

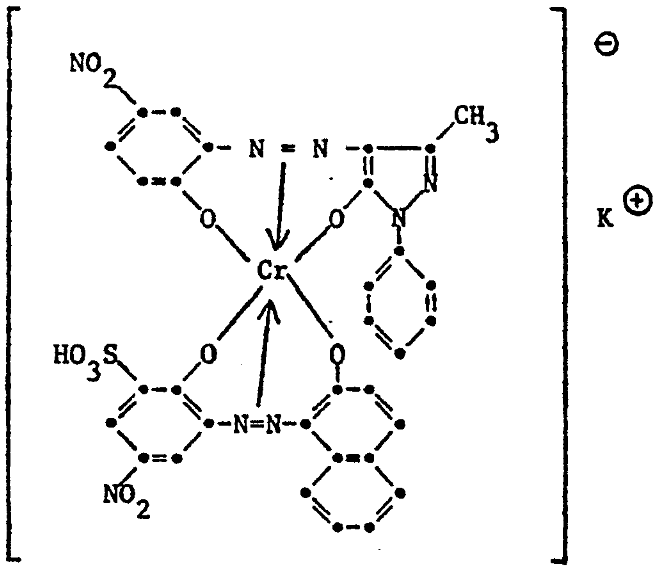

mit einem Trockensubstanzgehalt von 11,8 % gibt man am Ende der Synthese und nach der Metallisierung 12 Teile eines Naphthalinsulfonsäure-Formaldehyd-Kondensationsproduktes. Die bei Zusatz des anionischen Tensids 90° C heisse Syntheselösung lässt man anschliessend unter Rühren auf ca. 30°C abkühlen. Man erhält so eine stabile Farbstofflösung, die ohne Filtrationsprobleme mittels Hyperfiltration auf einen Trockensubstanzgehalt von 42 % aufkonzentriert wird, bei einem Entsalzungsgrad von 90 %.

Die konzentrierte Farbstofflösung wird mittels Sulfitablauge auf die gewünschte Farbstoff-Endkonzentration eingestellt und anschliessend im Zerstäubungstrockner getrocknet. Man erhält so ein gebrauchsfertiges Farbstoffgranulat.

Verfährt man analog und versetzt die Syntheselösung aber erst nach Erkalten mit dem genannten anionischen Kondensationsprodukt, so lässt sich die Farbstofflösung nur bis zu einem Trockensubstanzgehalt von höchstens 30% aufkonzentrieren. Feinste Farbstoffpartikel verstopfen die Membran und machen eine weitere Aufkonzentrierung unmöglich.

**Beispiel 3**: 43,9 Teile des 1:1 Chromkomplexes des Farbstoffs aus

diazotierter 6-Nitro-1-amino-2-naphthol-4-sulfonsäure und 2-Naphthol werden zusammen mit 37,6 Teilen des Farbstoffs aus diazotiertem 4-Nit-ro-2-aminophenol und 2-Chlor-acetylacetanilid in 600 Teilen heissem Wasser verrührt und die Mischung mit Natriumhydroxid neutralisiert. Anschliessend rührt man bei 90° C bis beide Ausgangsfarbstoffe gelöst sind. Hierauf wird die Lösung des entstandenen 1:2 Komplexes mit 9 Teilen eines Naphthalinsulfonsäure-Formaldehyd-Kondensationsproduktes versetzt und man lässt unter Rühren abkühlen. Die so erhaltene Lösung des 1:2 Chromkomplexfarbstoffes wird schliesslich mittels Hyperfiltration auf einen Trockensubstanzgehalt von 34% aufkonzentriert.

Die konzentrierte Farbstofflösung wird nach Zugabe von Sulfitablauge, Aethylenglykol und einem Antimikrobikum, durch Verdünnen mit Wasser auf die gewünschte Farbstoff-Endkonzentration eingestellt. Man erhält so eine gebrauchsfertige lagerstabile Flüssigformulierung des Metallkomplexfarbstoffs.

**Patentansprüche**

1. Verfahren zur Herstellung von Metallkomplexfarbstoff-Präparaten unter Anwendung eines Membrantrennverfahrens, dadurch gekennzeichnet, dass man vor, während oder nach der letzten Synthesestufe des Metallkomplexfarbstoffes die über 50°C heisse Syntheselösung mit einem anionischen Tensid versetzt und vor Anwendung des Membrantrennverfahrens auf eine Temperatur von nicht tiefer als 20°C abkühlen lässt.

2. Verfahren gemäss Anspruch 1, dadurch gekennzeichnet, dass man als anionisches Tensid das Formaldehydkondensationsprodukt einer aromatischen Sulfonsäure; ein Kondensationsprodukt aus Rohkresol, Formaldehyd und Naphthalinsulfonsäure; ein Ligninsulfonat oder ein Oxyligninsulfonat verwendet.

3. Verfahren gemäss Anspruch 2, dadurch gekennzeichnet, dass man als anionisches Tensid ein Naphthalinsulfonsäure-Formaldehyd-Kondensationsprodukt verwendet.

4. Verfahren gemäss Anspruch 1, dadurch gekennzeichnet, dass die Syntheselösung bei Zusatz des Tensids eine Temperatur von 70° bis 150°C, insbesondere 80° bis 95°C, aufweist.

5. Verfahren gemäss Anspruch 1, dadurch gekennzeichnet, dass die Syntheselösung während des

Membrantrennverfahrens eine Temperatur von 30° bis 40° C aufweist.

6. Verfahren gemäss Anspruch 1, dadurch gekennzeichnet, dass man das anionische Tensid in einer Konzentration von 5 bis 30 Gew.%, bezogen auf das Trockengewicht des Metallkomplexfarbstoffes, einsetzt.

7. Verfahren gemäss Anspruch 1, dadurch gekennzeichnet, dass man Farbstoffpräparate von 1:1 oder 1:2 Metallkomplexfarbstoffen herstellt, die als Liganden Mono- und/oder Disazofarbstoffe und als zentrales Metallion ein Cr- oder Co-Ion enthalten.

8. Verfahren gemäss Anspruch 1, dadurch gekennzeichnet, dass man das anionische Tensid nach der letzten Synthesestufe zusetzt.

9. Verfahren gemäss Anspruch 1, dadurch gekennzeichnet, dass das Membrantrennverfahren aus einer Hyperfiltration besteht, die bei einem Druck von 10 bis 100 bar, vorzugsweise 10 bis 30 bar, durchgeführt wird.

10. Verfahren gemäss Anspruch 9, dadurch gekennzeichnet, dass man eine durch ionische Gruppen enthaltende, polyfunktionelle Verbindungen modifizierte, asymmetrische Membran verwendet, deren Grundgerüst aus Celluloseacetat, Polyacrylnitril oder einem Copolymeren aus Acrylnitril und anderen äthylenisch ungesättigten Monomeren besteht und deren Poren einen Durchmesser von 0,1 bis 50 nm aufweisen.

11. Verfahren gemäss Anspruch 1, dadurch gekennzeichnet, dass der Trockensubstanzgehalt der Syntheselösung oder -suspension vor dem Membrantrennverfahren 5 bis 15 Gew.% und danach 30 bis 50 Gew.% beträgt.

12. Verfahren gemäss Anspruch 1, dadurch gekennzeichnet, dass man die konzentrierte, salzarme Farbstofflösung oder -suspension gegebenenfalls nach der Zugabe von Zusätzen durch Trocknen in ein festes Präparat überführt.

13. Verfahren gemäss Anspruch 1, dadurch gekennzeichnet, dass man die konzentrierte, salzarme Farbstofflösung oder -suspension gegebenenfalls nach der Zugabe von Zusätzen, durch Verdünnen und/oder mit Hilfe von Coupagemitteln in eine Flüssigformulierung mit vorgegebenem Endfarbstoffgehalt überführt.

**Claims**

1. A process for the preparation of formulations of metal complex dyes by means of a membrane separation process, which process comprises adding an anionic surfactant to the hot synthesis solution of over 50° C of the metal complex dye before, during or after the final step of the synthesis, and cooling the solution to a temperature not lower than 20° C before the membrane separation process.

2. A process according to claim 1, wherein the anionic surfactant is a condensation product of formaldehyde and an aromatic sulfonic acid; a condensation product of crude cresol, formaldehyde and naphthalenesulfonic acid; or a lignosulfonate or an oxylignosulfonate.

3. A process according to claim 2, wherein the anionic surfactant is a condensation product of naphthalenesulfonic acid and formaldehyde.

4. A process according to claim 1, wherein the synthesis solution on addition of the surfactant has a temperature in the range from 70° to 150° C, preferably from 80° to 95° C.

5. A process according to claim 1, wherein the synthesis solution has a temperature in the range from 30° to 40° C during the membrane separation process.

6. A process according to claim 1, wherein the anionic surfactant is employed in a concentration of 5 to 30% by weight, based on the dry weight of the metal complex dye.

7. A process according to claim 1 for the preparation of formulations of 1:1 or 1:2 metal complex dyes which contain monoazo and/or disazo dyes as ligands and a chromium or cobalt ion as central metal ion.

8. A process according to claim 1, wherein the anionic surfactant is added after the final synthesis step.

9. A process according to claim 1, wherein the membrane separation process consists of a hyperfiltration which is carried out under a pressure of 10 to 100 bar, preferably of 10 to 30 bar.

10. A process according to claim 1, which comprises the use of an asymmetrical membrane which is modified by polyfunctional compounds containing ionic groups and the basic skeleton of which consists of cellulose acetate, polyacrylonitrile or a copolymer of acrylonitrile and other ethylenically unsaturated monomers, and whose pores have a diameter of 0.1 to 50 nm.

11. A process according to claim 1, wherein the synthesis solution or suspension has a solids content of 5 to 15% before and 30 to 50% after the membrane separation process.

12. A process according to claim 1, wherein the concentrated dye solution or suspension of low salt content is converted into a solid formulation by drying, optionally after the addition of other ingredients.

13. A process according to claim 1, wherein the concentrated dye solution or suspension of low salt content is converted into a liquid formulation with a specified final concentration of dye by dilution and/or with the aid of extenders, optionally after the addition of other ingredients.

**Revendications**

1. Procédé de fabrication de préparations de colorants à complexe métallifère par l'utilisation d'un procédé de séparation sur membrane, caractérisé en ce qu'on ajoute, avant, pendant ou après la dernière étape de synthèse du colorant à complexe métallifère, un tensioactif anionique à la solution de synthèse, qui est à une température supérieure à 50° C, et qu'on laisse refroidir la solution de synthèse, avant utilisation du procédé de séparation sur membrane, à une température non-inférieure à 20° C.

2. Procédé selon la revendication 1, caractérisé en ce qu'on utilise comme tensioactif anionique le produit de condensation du formaldéhyde et d'un acide sulfonique aromatique; un produit de condensation de crésol brut, de formaldéhyde et d'acide naphtalénesulfonique; un ligninesulfonate ou un oxyligninesulfonate.

3. Procédé selon la revendication 2, caractérisé en ce qu'on utilise comme tensioactif anionique un produit de condensation acide naphtalénesulfonique/formaldéhyde.

4. Procédé selon la revendication 1, caractérisé en ce que la solution de synthèse, lors de l'addition du tensioactif, présente une température de 70 à 150° C, en particulier de 80 à 95° C.

5. Procédé selon la revendication 1, caractérisé en ce que la solution de synthèse présente, pendant le procédé de séparation sur membrane, une température de 30 à 40° C.

6. Procédé selon la revendication 1, caractérisé en ce qu'on utilise le tensioactif anionique à une concentration de 5 à 30 % en poids par rapport à l'extrait sec du colorant à complexe métallifère.

7. Procédé selon la revendication 1, caractérisé en ce qu'on fabrique des préparations colorantes de colorants à complexe métallifère 1:1 ou 1:2, qui contiennent comme ligands des colorants mono- et/ou disazoiques et, comme ion métallique central, un ion Cr ou Co.

8. Procédé selon la revendication 1, caractérisé en ce qu'on ajoute le tensioactif anionique après la dernière étape de synthèse.

9. Procédé selon la revendication 1, caractérisé en ce que le procédé de séparation sur membrane est constitué d'une hyperfiltration, qui est mise en oeuvre sous une pression de 10 à 100 bar, de préférence de 10 à 30 bar.

10. Procédé selon la revendication 9, caractérisé en ce qu'on utilise une membrane asymétrique, contenant des groupes ioniques et modifiée par des composés polyfonctionnels, dont l'ossature est constituée d'acétate de cellulose, de polyacrylonitrile ou d'un copolymère d'acrylonitrile et d'autres monomères à insaturation éthylénique, et dont les pores ont un diamètre de 0,1 à 50 nm.

11. Procédé selon la revendication 1, caractérisé en ce que l'extrait sec de la solution ou de la suspension de synthèse est de 5 à 15 % en poids avant le procédé de séparation sur membrane, et de 30 à 50 % en poids après.

12. Procédé selon la revendication 1, caractérisé en ce qu'on convertit en une préparation solide, par séchage, éventuellement après addition d'additifs, la solution ou la suspension concentrée de colorant, à faible teneur en sels.

13. Procédé selon la revendication 1, caractérisé en ce qu'on convertit en une formulation liquide, ayant une teneur finale prédéfinie en colorant, la solution ou la suspension concentrée de colorant, à faible teneur en sels, éventuellement après addition d'additifs par dilution et/ou à l'aide de diluants.